# EUROPEAN PATENT SPECIFICATION

(11) **EP 4 432 975 B1**
(45) Date of publication and mention of the grant of the patent: **04.06.2025**
(21) Application number: 22818637.5
(22) Date of filing: 17.11.2022
(51) Int. Cl.: A61C 17/34, A61C 17/32

(54) **RESONATOR ASSEMBLY AND POWER TOOTHBRUSH INCLUDING SUCH A RESONATOR**
RESONATORANORDNUNG UND ELEKTRISCHE ZAHNBÜRSTE MIT EINEM SOLCHEN RESONATOR.
ENSEMBLE RÉSONATEUR ET BROSSE À DENTS ÉLECTRIQUE COMPRENANT UN TEL RÉSONATEUR.

(30) Priority: 20.11.2021 US 202163281658 P
(43) Date of publication of application: 25.09.2024
(73) Proprietor: Koninklijke Philips N.V., 5656 AG Eindhoven (NL)
(72) Inventor: FOSTER, Regan Starkey, 5656 AG Eindhoven (NL)
(74) Representative: Philips Intellectual Property & Standards
(86) International application number: PCT/EP2022/082169
(87) International publication number: WO 2023/088984

(56) References cited:
- US-A1- 2009 320 220
- US-A1- 2011 203 061
- US-A1- 2013 025 080

## Description

### Field of the Disclosure

The present disclosure is directed generally to a resonator assembly for a drivetrain of a personal care device such as a power toothbrush device and systems for simultaneously actuating sweeping and tapping motions with a single actuator to achieve high performance cleansing results.

### Background

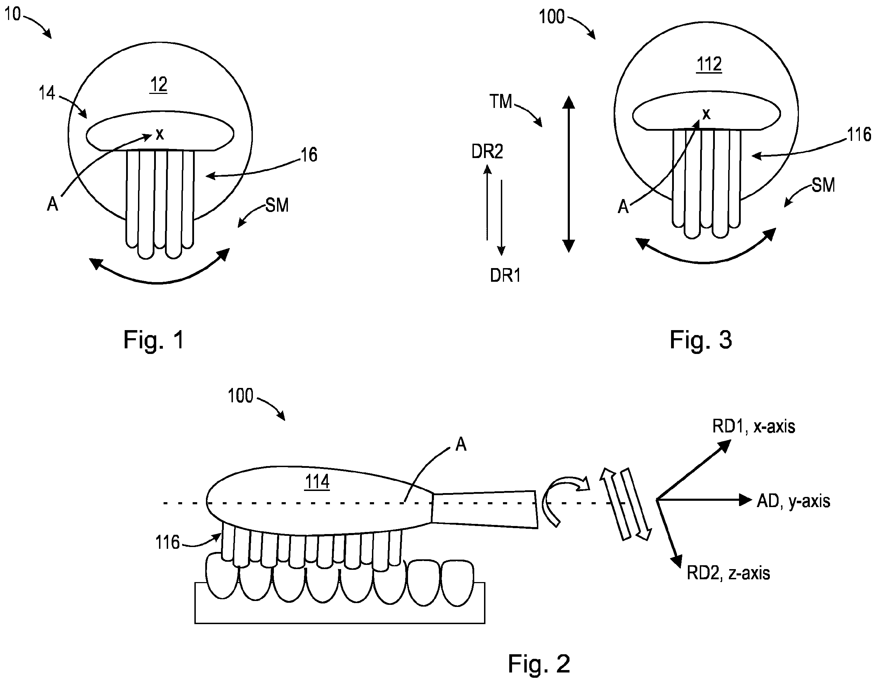

Current modem power toothbrush devices use rotary motion about a central axis of the brush head. This motion is known as a sweeping motion. A simplified schematic representation of a modern power toothbrush is shown in FIG. 1. As shown in FIG. 1, power toothbrush 10 has a handle 12 and a brush head 14. Bristles 16 are shown extending from brush head 14. In use, brush head 14 is driven by a drive system contained within handle 12. The bristles are typically rotated by the drive system about central axis A in a sweeping motion SM. The sweeping motion is typically embodied as movement that is linear, rotational, or a combination of both linear and rotational and the movement is tangential to the direction that the bristles are facing.

Unfortunately, toothbrush devices that employ the sweeping motion alone are not optimized for all target areas in the mouth (e.g., interproximal areas, gumline areas, incisor surfaces, molar surfaces, and overall surface areas of the teeth). Achieving proper cleaning performance at all target areas depends on a number of factors, including toothbrush layout, motion of the toothbrush, and user handling. Although manufacturers can control toothbrush layout or design, it is challenging to design a toothbrush that performs optimally at all target areas due to conflicting requirements for the different areas. Consequently, toothbrushes can have non-optimal performance at certain areas of interest. Although consumers could ideally use different types of toothbrushes to achieve the best cleaning in all the target areas, consumers only employ a single toothbrush device for daily oral care routines.

US 2011/203061 A1 discloses an actuator generating reciprocating rotational motion for devices like electric toothbrushes without a separate drive mechanism, using a magnet, coil, and elastic support to create motion via resonant-frequency alternating current within a compact and efficient design.

Thus, there is a need in the art for improved power toothbrush devices and systems that achieve stain and/or plaque removal and gum health objectives using simultaneous actuation of the sweeping and tapping motions with a single actuator.

### Summary of the Disclosure

The invention is as defined in the appended claims.

The present disclosure is directed generally to inventive electric or powered personal care devices, such as, an electric toothbrush or shaver, and methods for producing high performance cleansing results using the electric or powered personal care devices. The inventive systems achieve improved stain and/or plaque removal and gum health objectives by precisely and controllably generating a power tapping motion in combination with a sweeping motion with a single actuator. The aforementioned limitations can be overcome by combining the sweeping motion with a vertical up and down periodic motion that can be generated and driven with a suitable drivetrain. While two separate mechanical systems can be coupled together to drive the tapping and sweeping motions, such a combination comes with drawbacks of cost, size, and complexity that prohibit competitiveness in the power toothbrush market. Various embodiments and implementations herein are directed to improved systems having a brush head member, a set of bristles, and a drivetrain assembly that achieves both the sweeping and tapping motions simultaneously without compromising on other qualities, such as, cost, size, or user experience. The drivetrain assembly allows freedom of rotation about the central axis and motion in the vertical direction parallel to the direction of the bristles or an axis of alignment of the bristles and also drives these motions. Thus, the improved drivetrain assembly simultaneously generates (i) periodic movement about a central axis of the device or along a line that is tangential to the brush head member; and (ii) periodic linear movement in a direction that is parallel to a z-axis of the device or an axis of alignment of the bristles. Applicant has recognized and appreciated that electric or powered personal care devices can be significantly improved upon by controllably moving the bristles in a sweeping motion and controllably driving the bristles in a direction that is parallel to the z-axis of the device or an axis of alignment of the bristles (i.e., in a tapping motion), where the movement is within a particular range of critical amplitudes and frequencies.

In a first aspect, a resonator assembly for a drivetrain assembly of a power toothbrush device is provided. The resonator assembly includes a resonator connected to a drivetrain shaft configured to transmit motion generated by the drivetrain assembly to a brush head member, wherein the resonator is configured to rotate about a central axis of the power toothbrush device to periodically move a set of bristles of the brush head member in a first movement pattern. The resonator assembly further includes a fixed point positioned on a frame of the power toothbrush device; a resilient member connected at a first end proximate to the resonator and at a second end to the fixed point; a magnet connected with the resonator; and a conductor connected with the frame, wherein the conductor is proximate to the magnet. When the magnet moves toward the conductor in a first direction, a force is generated upon the magnet in a second direction that is opposite the first direction, and the force generated upon the magnet thereby causes a torque on the resilient member and the torque generates a rotation of the resilient member about a second axis that is different than the central axis.

According to an embodiment, the resilient member is a V-shaped spring.

According to an embodiment, the second axis is perpendicular to the central axis and extends along an x-axis of the power toothbrush device.

According to an embodiment, the rotation of the resilient member about the second axis moves the set of bristles in a second movement pattern that is different than the first movement pattern, wherein the set of bristles moves parallel to a bristle direction of the set of bristles in the second movement pattern.

According to an embodiment, the magnet is positioned closer to the central axis than the conductor.

According to an embodiment, a top surface of the conductor is aligned with a top surface of the resilient member and the magnet is positioned above the top surface of the conductor.

According to an embodiment, the resonator assembly further includes a coil connected in series to a capacitor or a diode to passively control the force generated on the magnet.

According to an embodiment, the resonator assembly further includes a coil connected in series to a switch to actively control the force generated on the magnet.

In a second aspect, a power toothbrush device is provided. The power toothbrush device includes a frame, a brush head member, and a drivetrain assembly. The frame includes a fixed point. The brush head member includes a set of bristles at a distal end thereof, the set of bristles extending from the brush head in a bristle direction. The drivetrain assembly includes a drivetrain shaft configured to transmit motion to the brush head member, the drivetrain assembly comprising: a resonator connected to the drivetrain shaft, wherein the resonator is configured to rotate about a central axis of the power toothbrush device to periodically move the set of bristles in a first movement pattern; a resilient member connected at a first end to the resonator and connected at a second end to the fixed point of the frame; a magnet connected with the resonator; and a conductor connected with the frame, wherein the conductor is proximate to the magnet. As the magnet moves toward the conductor in a first direction, a force is generated upon the magnet in a second direction that is opposite the first direction, and the force generated upon the magnet thereby causes a torque on the resilient member and the torque generates a rotation of the resilient member about a second axis that is different than the central axis.

According to an embodiment, the resilient member is a V-shaped spring.

According to an embodiment, the second axis is perpendicular to the central axis and extends along an x-axis of the power toothbrush device.

According to an embodiment, the rotation of the resilient member about the second axis moves the set of bristles in a second movement pattern that is different than the first movement pattern, wherein the set of bristles moves parallel to the bristle direction in the second movement pattern.

According to an embodiment, the magnet is positioned closer to the central axis than the conductor.

According to an embodiment, a top surface of the conductor is aligned with a top surface of the resilient member and the magnet is positioned above the top surface of the conductor.

According to an embodiment, the power toothbrush device further includes a coil connected in series to a capacitor, a diode, or a switch to control the force generated on the magnet.

In various implementations, a processor or controller may be associated with one or more storage media (generically referred to herein as "memory," e.g., volatile, and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects as discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure should be accorded a meaning most consistent with the particular concepts disclosed herein.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is a simplified schematic representation of an end view of a modem power toothbrush device employing a sweeping motion.
FIG. 2 is a simplified schematic representation of a portion of a power toothbrush device, according to aspects of the present disclosure.
FIG. 3 is a simplified schematic representation of an end view of a power toothbrush device configured to employ sweeping and tapping motions, according to aspects of the present disclosure.
FIG. 4 is a schematic representation of a power toothbrush device, according to aspects of the present disclosure.
FIG. 5 is a schematic representation of a portion of a drivetrain assembly of a power toothbrush device, according to aspects of the present disclosure.
FIG. 6 is a schematic representation of a portion of a drivetrain assembly of a power toothbrush device, according to aspects of the present disclosure.
FIG. 7 is a schematic representation of a portion of a drivetrain assembly of a power toothbrush device, according to aspects of the present disclosure.
FIG. 8 is a schematic representation of a portion of a drivetrain assembly of a power toothbrush device, according to aspects of the present disclosure.
FIG. 8A is a cross-sectional view of a resonator assembly of a drivetrain assembly of a power toothbrush device, taken generally along line 8A-8A in FIG. 8, according to aspects of the present disclosure.
FIG. 8B is a cross-sectional view of the resonator assembly of FIG. 8A rotated about central axis A, according to aspects of the present disclosure.
FIG. 9 is a top view of a portion of the resonator assembly of FIG. 8A rotated 90 degrees, according to aspects of the present disclosure.
FIG. 10 is a schematic representation of a portion of a resonator assembly of a drivetrain assembly of a power toothbrush device, according to aspects of the present disclosure.
FIG. 11 is a schematic representation of a portion of a resonator assembly of a drivetrain assembly of a power toothbrush device, according to aspects of the present disclosure.
FIG. 12 is a flowchart illustrating a method of operating a power toothbrush device, according to aspects of the present disclosure.

### Detailed Description of Embodiments

The present disclosure describes various embodiments of improved systems for driving brush heads of electric or powered personal care devices, such as, electric toothbrushes or shavers and the like. Applicant has recognized and appreciated that personal care devices can provide improved cleansing performance at critical areas of the user's mouth by driving the bristles of the toothbrush in a vertical periodic motion that is parallel to the direction of the bristles, where the amplitude of the vertical motion is equal to or greater than 0.25 mm (referred to herein as "power tapping"). As used herein, the term "vertical" does not mean an absolute direction with respect to the ground, but instead is used to indicate a relative direction of movement illustrated in the Figures. As described herein, the inventive power tapping motion within power toothbrush devices: (i) achieves deeper reach in gum pockets to remove subgingival plaque, (ii) achieves higher peak forces at surfaces which improve plaque and/or stain removal, (iii) prevents pinning of bristle tufts which improves plaque removal by restoring beneficial tuft sweeping behavior, (iv) achieves more resilience to variables of use like toothbrush placement, toothbrush angle, and toothbrush pressure, and (v) provides new options for experiential modes for the consumer. Accordingly, exemplary improved systems described or otherwise envisioned herein provide a brush head member having a set of bristles and a drivetrain assembly to generate periodic rotational and linear movements simultaneously using a single actuator. The periodic linear movement is transmitted by a drivetrain shaft to move the bristles in a direction that is parallel to the z-axis of the device. Applicant has recognized and appreciated that such controlled linear movement can be combined with rotational movement to provide improved cleaning performance.

A particular goal of utilization of the embodiments and implementations herein is to provide a mechanism to provide a power tapping motion in a power toothbrush device like, e.g., a Philips Sonicare^{™} electric toothbrush (manufactured by Koninklijke Philips N.V.). However, the components of the device may be utilized with many other personal care devices, including oral care devices, oral cleaning devices, flossers, skin cleaners, and many other devices. This disclosure should not be limited by the specific embodiments depicted and described.

As shown in FIG. 2, a simplified schematic representation of a portion of a power toothbrush device 100 configured to generate a sweeping motion and/or a tapping motion is provided. Power toothbrush device 100 comprises brush head 114 and bristles 116 which can be driven to rotate about central axis A and pulse or tap in direction RD2. The directions provided in FIG. 2 are included to demonstrate the spatial terminology used in the art and the present application. As used herein, the term "vertical" means the direction indicated. Axial direction AD is parallel to central axis A and extends along a y-axis of the device 100. Radial direction RD1 is orthogonal to central axis A and radial direction RD2 and extends along an x-axis of the device 100. Radial direction RD2 is orthogonal to both axial direction AD and radial direction RD1, parallel to the axes of the bristles 116 depicted, and extends along a z-axis of the device 100. The power tapping motion described herein refers to controllable movement of the brush head and/or bristles in radial direction RD2. In other words, the power tapping motion refers to motion of the bristles that is parallel to an axis of alignment of the bristles or normal (i.e., perpendicular) to the brush head member. The sweeping motion refers to rotary and/or linear motion of the bristles that is perpendicular to the axis of alignment of the bristles. In embodiments, the power tapping motion refers to controllable movement of the brush head and/or bristles in radial direction RD2 by rotating the drivetrain shaft about an axis extending in radial direction RD1 (i.e., about an x-axis of the device).

Referring to FIG. 3, a schematic representation of an end view of power toothbrush device 100 is provided. Device 100 is configured to generate a variety of motions, each motion comprising a summation (i.e., a cumulative act, motion, or effect) of sweeps or strokes and pulses or taps. The sweeps or strokes are directed in direction SM, (which would be in a direction between occlusal surfaces (i.e., biting surfaces) and the gumline when the toothbrush is held with the bristle tips pointing toward a buccal side of the teeth). The pulses or taps are directed in the vertical direction TM (which would be a lingual to facial direction when the toothbrush is held with the bristle tips pointing toward a buccal side of the teeth). As used herein, the tapping motion is defined as vertical periodic movement (i.e., direction TM) that is equal to or greater than 0.25 mm in amplitude. As discussed in greater detail herein, the power toothbrush device 100 can be configured to turn on and off the sweeping and tapping motions (SM and TM) for optimizing motion to a specific region that a particular motion is most beneficial for. In some cases, the particular motion comprises either the sweeping motion alone or the tapping motion alone. In other cases, the particular motion comprises some combination of the sweeping motion and the tapping motion. For example, in embodiments, the tapping motion alone can be used for the lower lingual anterior region of the mouth. A small power tapping motion (i.e., a tapping motion with an amplitude on the smaller side of the critical range described herein) can be used with the sweeping motion for the buccal anterior region of the mouth. Alternatively, the sweeping motion alone can be used for the buccal anterior region of the mouth. A large power tapping motion (i.e., a tapping motion with higher amplitudes of the critical range described herein) can achieve better reach at interproximal regions in-between teeth.

The term frequency refers to a number of cycles for a given time interval, e.g., a second. The term amplitude refers to a peak amplitude which can comprise a maximum absolute value of a signal. In embodiments, the desired range of amplitudes for the power tapping motion is from around ±0.25 mm to around ±3 mm, the power tapping motion generally comprises a periodical vertical motion equal to or greater than ±0.5 mm. Amplitudes that are higher than ±3 mm are not desired due to a risk of tooth chatter, where the platen of the toothbrush device can impact the occlusal surfaces of the opposing jaw. Additionally, amplitudes that are higher than ±3 mm can cause undesired vibration of oral and nasal tissues, as well as an unpleasant sensation on the treated surfaces. Frequencies that are lower than 0.25 Hz would be too slow to be efficacious. Frequencies that are higher than 520 Hz would be over double the primary resonant frequency and are not desirable.

It should be appreciated that a recommended oral care routine lasts for 2 minutes and, when considering an average of 32 teeth, there is approximately 3.75 seconds per tooth available during the recommended oral care routine. Thus, if the incidence of the power tapping motion is slower than 4 seconds, then it is too slow to be applied uniformly throughout the mouth (i.e., at every interproximal spot). Accordingly, in preferred embodiments, the incidence of the power tapping motion occurs at least every 3.75 seconds (i.e., a frequency of approximately 0.27 Hz). In embodiments, the minimal frequency may be approximately 2 Hz (i.e., at least every 0.5 seconds). In further embodiments, in order for a user to experience the power tapping motion uniformly throughout the mouth (i.e., at every interproximal spot and/or at each tooth), the power tapping motion can occur multiple times during each pass over a single tooth. Thus, the requisite frequency would be approximately 20 Hz (i.e., at least every 0.05 seconds). Of course, if an oral care routine is shorter than or longer than 2 minutes, it should be appreciated that the incidence of the power tapping motion may be adjusted accordingly so that the incidence of the power tapping motion occurs uniformly throughout the oral care routine. In other embodiments, it should be appreciated that it may be desired to have the incidence of the power tapping motion occur inconsistently or nonuniformly due to an analysis of particular areas where the tapping motion is more beneficial than other areas, for example.

In example embodiments, the sweeping motion is combined with the tapping motion having an amplitude of 0.25 mm and, the addition of the tapping motion can generate a 1% improvement in the gumline areas, a 3% improvement in the interdental areas, and a 1% overall improvement in cleaning performance considering coverage of all surfaces to be cleaned.

The tapping motion improves the performance of the sweeping motion, in part, by untrapping or unpinning the bristle tufts. Bristle trapping or pinning is a phenomena where, under heavy loads, the bristles can become constrained or trapped such that they no longer freely move according to the sweeping motion delivered by the drivetrain. When the user applies too much load when brushing, the bristle tufts can become partially constrained in their movement on the surface of the teeth. As a result of the constraint, the sweeping motion is reduced and the cleaning performance can suffer. When the user applies even more load, the bristle tufts can become trapped or pinned where the tufts do not move at all when brushing. As a result of the trapped or pinned bristles, there is no sweeping motion and the user derives no benefit from the sweeping motion from the drivetrain assembly. When bristles are constrained or trapped, the cleaning benefits only resume when the user manually moves the product to a new orientation and frees the bristles from the heavy loads.

The sweeping motion performs best when the bristles touch the surface of the tooth and can move freely along large surface areas without being constrained. When brushing with sweeping and tapping motions together, the bristle tufts splay out as the load increases or as the brush head moves in direction DR1 due to the drivetrain assembly generating the vertical up-down movement (i.e., the power tapping motion). As the load increases due to the force exerted from the drivetrain assembly or otherwise due to user applied load for example, the tufts can become more and more constrained. However, if the amplitude of the brush head movement in direction DR1 is large enough, the large amplitude movement can cause buckling of a constrained or trapped bristle and effectively release or unload the bristle. Thus, the addition of the tapping motion of a sufficiently large amplitude to the sweeping motion allows the bristles to move with more freedom, thereby improving cleaning performance.

Critically, when the brush head moves in direction DR2 during the periodic tapping motion, the behavior reverses and as the load decreases further, the tufts become less and less constrained. The tapping motion can allow the tufts to cover a larger surface area during the sweeping motion and improves plaque removal by restoring the beneficial sweeping motion.

The addition of the tapping motion to the sweeping motion also achieves a deeper reach into gum pockets to remove subgingival plaque. Within gum pockets, the addition of the tapping motion achieves improved cleaning performance on marginal areas, interproximal areas, mesial areas, and buccal areas, and an improved overall cleaning performance. In example embodiments, the deeper reach and improved cleaning performance is achieved under a 30 degree roll angle, a 45 degree roll angle, or a 60 degree roll angle, or any suitable roll angle. Thus, the addition of the tapping motion renders the cleaning efficiency of the brush to be more robust to user orientation, and less dependent on the user's technique, than using the sweeping motion alone.

The improved cleaning performance can be achieved by using the critical operating parameters for the tapping motion discussed herein. While a variety of drivetrain assemblies can be implemented to generate the tapping motion, we will discuss one exemplary assembly below merely to illustrate how the invention can be implemented and practiced.

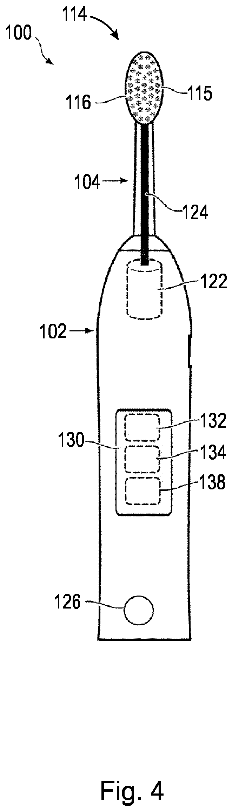

Referring to FIG. 4, an example power toothbrush device 100 including a body portion 102 with a housing or frame and a brush head member 104 mounted on the body portion 102 is provided. Brush head member 104 includes at its end remote from the body portion 102 brush head 114. Brush head 114 includes bristle face 115, which provides a plurality of bristles 116. According to an embodiment, the bristles extend along an axis of alignment substantially perpendicular to the head's axis of elongation, although many other embodiments of the brush head and bristles are possible.

Head member 104, brush head 114, and/or bristle face 115 are mounted so as to be able to move relative to the body portion housing 102. The movement can be any of a variety of different movements, including vibrations or rotation, among others. According to one embodiment, head member 104 is mounted to the body portion housing 102 so as to be able to vibrate relative to body portion housing 102, or, as another example, brush head 114 is mounted to head member 104 so as to be able to vibrate relative to body portion housing 102, or, as another example, bristle face 115 is mounted to head member 104 so as to be able to vibrate relative to body portion housing 102. The head member 104 can be fixedly mounted onto body portion housing 102, or it may alternatively be detachably mounted so that head member 104 can be replaced with a new one when the bristles or another component of the device are worn out and require replacement.

The body portion includes a drivetrain assembly 122 with an actuator or motor for generating movement and a transmission component 124, or shaft, for transmitting the generated movements to brush head member 104. For example, drivetrain assembly 122 comprises a motor or electromagnet(s) that generates movement of drivetrain shaft 124, which is subsequently transmitted to the brush head member 104. Drivetrain and motor 122 can include components such as a power supply, an oscillator, and one or more electromagnets, among other components. In this embodiment the power supply comprises one or more rechargeable batteries, not shown, which can, for example, be electrically charged in a charging holder in which power toothbrush device 100 is placed when not in use.

The body portion is further provided with a user input 126 to activate and de-activate movement generator or drivetrain assembly 122. The user input 126 allows a user to operate the toothbrush 100, for example to turn the toothbrush 100 on and off. The user input 126 may, for example, be a button, touch screen, or switch.

The body portion of the device also comprises a controller 130. Controller 130 may be formed of one or multiple modules, and is configured to operate the power toothbrush device 100 in response to an input, such as input obtained via user input 126 or an input from a sensor within the device. Controller 130 can comprise, for example, a processor 132 and a memory 134, and can optionally include a connectivity module 138. The processor 132 may take any suitable form, including but not limited to a microcontroller, multiple microcontrollers, circuitry, a single processor, or plural processors. The memory 134 can take any suitable form, including a non-volatile memory and/or RAM. The non-volatile memory may include read only memory (ROM), a hard disk drive (HDD), or a solid state drive (SSD). The memory can store, among other things, an operating system. The RAM is used by the processor for the temporary storage of data. According to an embodiment, an operating system may contain code which, when executed by controller 130, controls operation of the hardware components of power toothbrush device 100. According to an embodiment, connectivity module 138 transmits collected sensor data, and can be any module, device, or means capable of transmitting a wired or wireless signal, including but not limited to a Wi-Fi, Bluetooth, near field communication, and/or cellular module.

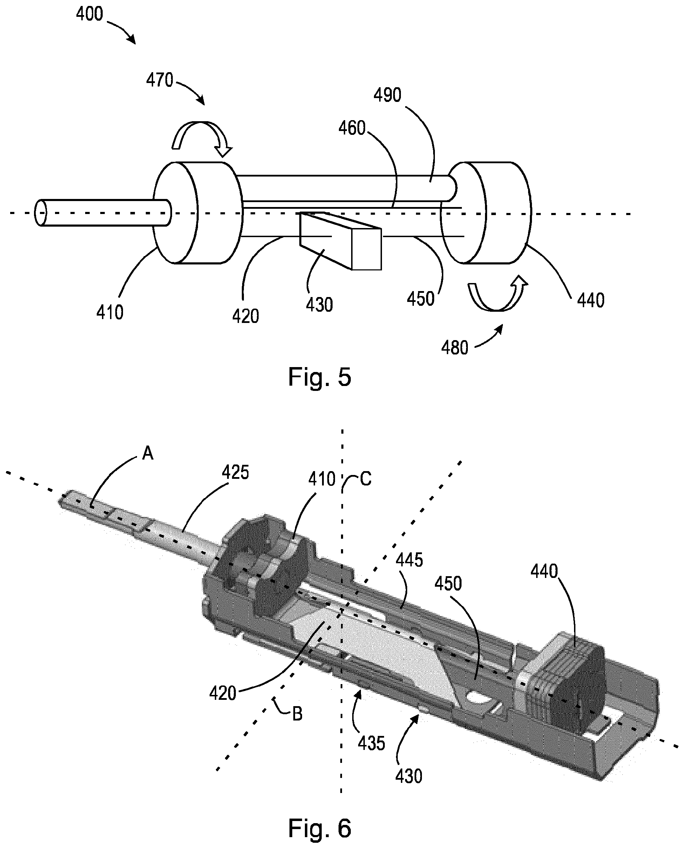

Referring to FIG. 5, in one embodiment, a schematic drivetrain assembly 400 of a power toothbrush device is provided for simultaneously generating the periodic rotational and linear movements. The drivetrain assembly 400 comprises a load mass 410, which can be brush head member 104 or connected to brush head member 104. The load mass 410 is connected by a spring 420 to a fixed point 430 which is a portion of the frame or housing of the device, or fixedly connected to a portion of the frame or housing of the device. The drivetrain assembly also comprises a balance mass 440. The balance mass 440 can be connected by a spring 450 to the fixed point 430 or another fixed point. The balance mass 440 can also be connected to load mass 410 by another spring 460. The drivetrain assembly 400 also comprises an actuator 490 that exerts a force on the load mass 410, the balance mass 440, or on both the load mass 410 and the balance mass 440. In this embodiment of the drivetrain assembly, the load mass 410 and the balance mass 440 act as two separate resonators that are coupled via spring 460.

According to an embodiment, the natural frequencies of the two separate resonators, the load mass 410 and the balance mass 440, should be equal when not coupled by spring 460. As a result, the first resonance frequency is characterized by the in-phase movement of both load mass 410 and balance mass 440. This resonance is located at a frequency equal to the square root of the stiffness of spring 420 divided by the load mass 410, or the square root of the stiffness of spring 450 divided by the balance mass 440. The second resonance frequency is characterized by the out-of-phase movement of the load mass 410 and the balance mass 440. This resonance is shifted upwards in frequency with respect to the first resonance. The amount of frequency shift can be determined by the stiffness of the coupling spring 460.

Drivetrain 400 can be used to create an oscillatory rotation by applying a rotational force excitation. The rotational force can be applied in different ways, including to the load mass 410 only, to the balance mass 440 only, or to both the load mass 410 and the balance mass 440. For example, torque 470 and/or 480 is applied to balance mass 440 and/or load mass 410. Although FIG. 4 depicts a specific direction of forces 470 and 480, it will be appreciated that these forces can be exerted in either a clockwise or a counterclockwise direction. Typically, when force is applied to both the load mass 410 and the balance mass 440, the force applied to one mass will be out of phase with the force applied to the other mass. When the frequency of the force excitation is matched to the second resonance frequency of the resonator, the load mass rotational amplitude is high while the net force from the resonator to the frame or housing is zero or nearly zero, which results in low vibrations of the handle.

According to an embodiment, the force excitation is exerted on the balance mass 440. In this embodiment, the coupling spring 460 transfers energy from the balance mass 440 to the load mass 410. The dynamic response of the system depends on the excitation frequency. According to an embodiment, the force excites the first natural frequency, the second natural frequency, or a combination of both. According to another embodiment, the force excitation is exerted on the load mass 410. In this embodiment, the coupling spring 460 transfers energy from the load mass 410 to the balance mass 440. The dynamic response of the system depends on the excitation frequency. According to an embodiment, the force excites the first natural frequency, the second natural frequency, or a combination of both.

According to yet another embodiment, the force excitation is exerted on both the load mass 410 and the balance mass 440. The dynamic response of the system depends on the excitation frequency and relative phase between the two forces. When the forces are in-phase, only the first natural frequency can be excited. When the forces are out of phase, only the second natural frequency can be excited. Applying force excitation on both the load mass 410 and the balance mass 440 may be an optimal excitation strategy for certain embodiments of the power toothbrush device, as it can efficiently excite the second natural frequency in the system when the excitation forces are out of phase, and the second natural frequency may be the preferred excitation frequency because the net force from the resonator to the frame or housing should be zero or nearly zero. Additionally, by applying out of phase forces to the load mass and the balance mass, the reaction force from the motor itself to the handle is also zero or nearly zero.

Although in a perfect system the coupling spring 460 could be removed if the load resonator natural frequency and the balance resonator natural frequency were exactly equal, in practice the load resonator and balance resonator are never exactly equal due to tolerances, external loading, and other factors. Furthermore, the system is highly sensitive to very small differences in natural frequencies, meaning that minor factors can have a very large impact. As a result, the coupling spring 460 is a vital component that synchronizes the movement between the balance mass and the load mass.

FIG. 6 shows an embodiment of a portion of a drivetrain assembly of a power toothbrush. The drivetrain assembly comprises load mass or reflector 410, from which extends a drivetrain transmission component or shaft 425 to drive a brush head member 104. The drivetrain assembly also comprises a balance mass or rear hub 440. The load mass 410 and the balance mass 440 are connected by springs 420, spring 450, and frame 445. Load mass 410 is connected by spring 420 to fixed point 430. Balance mass 440 is connected by spring 450 to fixed point 435. Spring 420 and any of the other springs of the system can be, for example, a tension spring, a torsion spring, a compression spring, a leaf spring, a V-shaped spring, a U-shaped spring, or any of a variety of different spring shapes, types, and sizes. In embodiments, spring 420 is arranged on top of spring 450 and further includes another spring positioned below spring 420 and on top of spring 450.

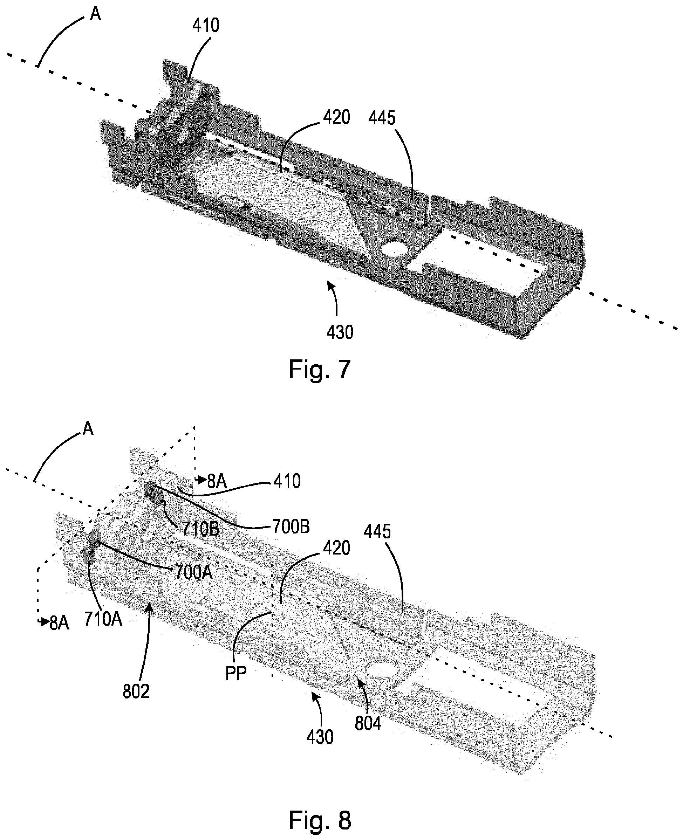

Referring to FIG. 7, in one embodiment, the drivetrain assembly of FIG. 6 is shown with front spring 420 between load mass 410 and fixed point 430 which is a portion of the frame or housing of the device, or fixedly connected to a portion of the frame or housing of the device. The balance mass or rear hub 440 is omitted in FIG. 7 as well as the drivetrain transmission component 425 and spring 450. Although the springs are shown with a specific arrangement in FIGS. 6 and 7, the springs can take many different configurations or arrangements. For example, the spacing and relationships between the springs can be altered without altering the functioning of the system. Furthermore, the size and location of the fixed points 430 and 435 can vary.

A key benefit of the drivetrain design described or otherwise contemplated herein is that it allows freedom of rotary motion about the x and y axes, while limiting rotation about the z axis and translation in the y axial direction. Referring to FIG. 6, freedom of rotation about the y axis refers to rotation about central axis A. Freedom of rotation about the x axis refers to rotation about axis B or an axis parallel to axis B along axis A. The z axis refers to rotation about axis C or an axis extending in radial direction RD2 parallel to axis C along axis A. The design limits rotation about axis C or translation along axis A.

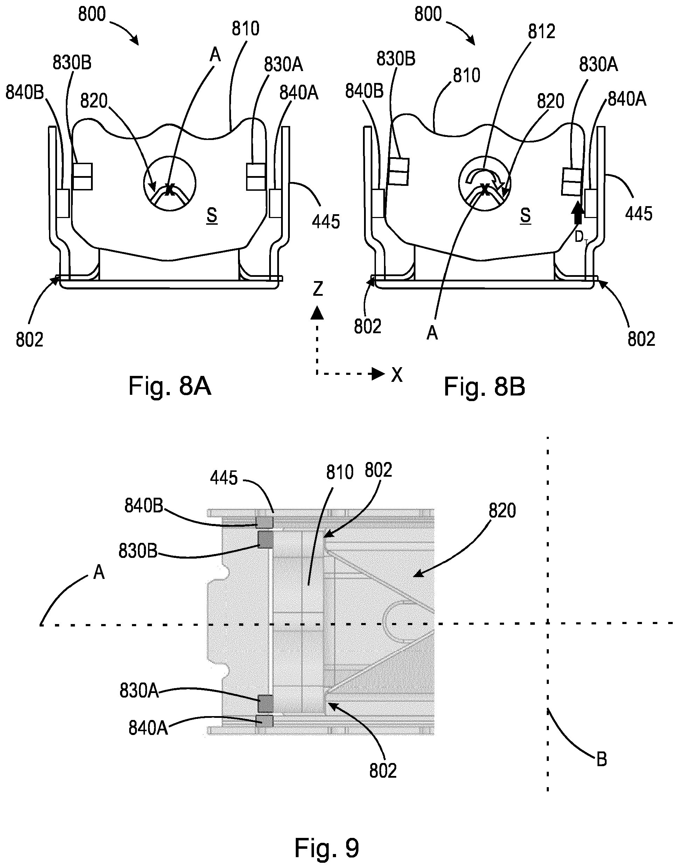

Applicant has recognized and appreciated that the principles of Faraday's law and Lenz's law can be utilized to drive rotary motion about axis B to generate the power tapping motion without using forces external to the drivetrain construction. As shown in FIG. 8, a pair of magnets 700A, 700B can be attached to load mass 410 which is configured to rotate about axis A and a pair of conductive elements 710A, 710B can be positioned near the magnets 700A, 700B on a non-moving component such as frame 445. A change in magnetic field passing through conductive elements 710A and 710B generates an electromotive force which results in an oppositely oriented magnetic field as further described herein. Magnets 700A, 700B can be any suitable permanent magnet, such as, neodymium and silicon magnets. Conductive elements 710A, 710B can be any suitable conductor made of any suitable non-magnetic material such as copper, aluminum, etc., or any combination thereof.

Referring to FIG. 8A, an example cross-sectional view of a resonator assembly 800, taken generally along line 8A-8A in FIG. 8, is provided. In FIG. 8B, a cross-sectional view of the resonator assembly of FIG. 8A rotated about central axis A is provided. FIG. 8A represents resonator assembly 800 in a static condition and FIG. 8B represents resonator assembly 800 in a moving condition. Although FIG. 8B depicts the assembly rotated in clockwise direction 812, it should be appreciated that load mass 410 or resonator 810 can be rotated in either clockwise or counter-clockwise directions about axis A. FIG. 9 shows a top view of a portion of the resonator assembly of FIG. 8A rotated 90 degrees about axis C or the z-axis.

Resonator assembly 800 comprises resonator 810 which is equivalent to rotatable load mass, front hub, or reflector 410 described herein. Although not shown in FIGS. 8A and 8B, resonator 800 can be connected to a drivetrain shaft 824 (e.g., shaft 124) to transmit vibrations to a brush head member (e.g., member 104). Resonator 810 is configured to rotate about central axis A of a power toothbrush device to periodically move bristles 116 in a first movement pattern, namely, a sweeping motion. Resonator 810 is made of steel or any one or more other suitable materials. Resonator assembly 800 further includes a resilient member 820 (e.g., spring 420) which can be embodied as a V-shaped spring or any suitable alternative. A first end 802 of resilient member 820 is connected to frame proximate to resonator 810. A second end 804 of resilient member 820, opposite the first end 802 along axis A, is connected to a fixed point on frame 802 (e.g., fixed point 430). The first and second ends of resilient member 820 are separated from each other along axis A as shown in FIG. 8. Resonator assembly 800 further includes magnets 830A, 830B that are equivalent to magnets 700A, 700B and conductors 840A, 840B that are equivalent to conductors 710A, 710B discussed above.

An example orientation of magnets 830A, 830B relative to conductors 840A, 840B in the z and x axes is shown in FIGS. 8A and 8B. In the embodiment depicted, magnets 830A, 830B are connected to a front-facing surface S of resonator 810 and conductors 840A, 840B are connected to inward-facing surfaces of frame 445. Conductors 840A and 840B face each other within frame 445. Conductors 840A, 840B are stationary relative to resonator 810 and magnets 830A, 830B. Although the clearance between the magnets and conductors is small, the magnets should not come into direct contact with the conductors during rotation of the resonator. Magnets 830A, 830B can be oriented with their north poles facing upward and their south poles facing downward. As shown in FIGS. 8A and 8B, the top surfaces of conductors 840A, 840B are aligned with a top surface of resilient member 820 and magnets 830A, 830B are positioned above the top surfaces of the conductors 840A, 840B. As shown in FIG. 9, magnets 830A, 830B are positioned closer to central axis A than conductors 840A, 840B. In other words, magnets 830A, 830B are radially inward relative to conductors 840A, 840B.

To generate the power tapping motion with reference to FIG. 8B, as magnet 830A moves toward conductor 840A in the clockwise direction, force D_{T} is generated upon magnet 830A in a second direction that is opposite the first direction (i.e., counter-clockwise). Force D_{T} generated upon the magnet 830A thereby causes a torque on resilient member 820 in the vertical direction and this torque generates a rotation of the resilient member about axis B (shown in FIG.9). Rotation of the resilient member 820 about axis B moves the connected drivetrain shaft 824 in the z-axis direction. The movement of the resilient member 820 along the z-axis or about axis B periodically moves shaft 824, 124, brush head member 104, and bristles 116 in a second movement pattern, namely, a tapping motion. An imaginary pivot point PP (shown in FIG. 8) is located within resilient member 420, 820 along axis A to reverse the sweeping motion and the tapping motion. Pivot point PP allows for the balancing of the movement or reaction forces by utilizing the natural frequency or eigenfrequency of drivetrain assembly 800. It should be appreciated that pivot point PP can be arranged at different points along axis A in different embodiments. Additionally, it should be appreciated that although pivot point PP is an imaginary point in FIG. 8, in alternate embodiments, pivot point PP can be embodied as a structural pivot that reverses the sweeping and tapping movement.

The magnitude of the force D_{T} generated on magnet 830A is subject to magnet material, magnet size, proximity to the conductor, the conductor resistance, conductor volume, and conductor form as should be appreciated. In embodiments, a solid-black form of the conductors should have the largest potential force magnitude and be agnostic to magnetic field shape of the magnet. However, a solid-block form can limit the force control to be always in an "on" condition.

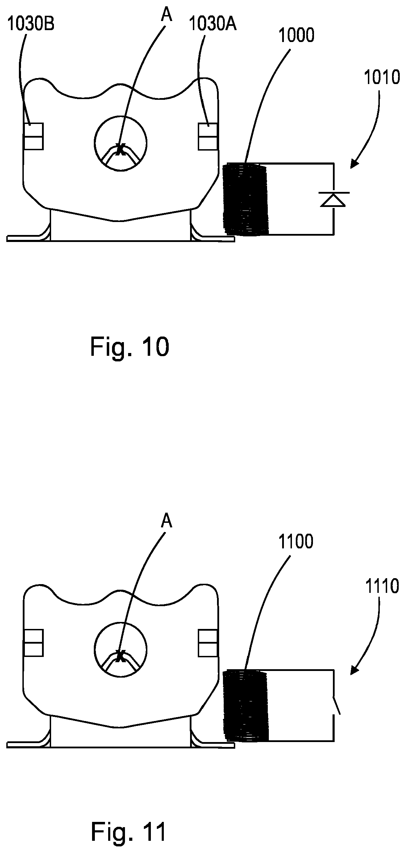

In embodiments, it is desirable to control the force D_{T} to turn it "on" and/or "off" and change the magnitude of force. Such control allows variability in tapping magnitude, phase of tapping relative to sweeping motions, and tapping frequency variability. One way to provide such control is by forming a coil from conductor wire and connecting the coil in series to any one or more of a variety of electrical components. The electrical components can include a capacitor, a diode, a switch, a transistor, or any combination thereof. For example as shown in FIG. 10, a coil 1000 can be connected in series with a diode 1010. In such an embodiment, only force in one direction occurs on magnet 1030A, changing the force value and frequency of the force passively through coil 1000 and diode 1010. As shown in FIG. 11, a coil 1100 can be connected in series with a switch 1110. In such an embodiment, the force can be controlled actively to allow for on/off control and enabling phase shifting, frequency shifting, and/or magnitude modulation. Advantageously, the tapping motion described herein can be turned off by opening a circuit, for example, when such motion is not desired such as in particular areas of the user's mouth.

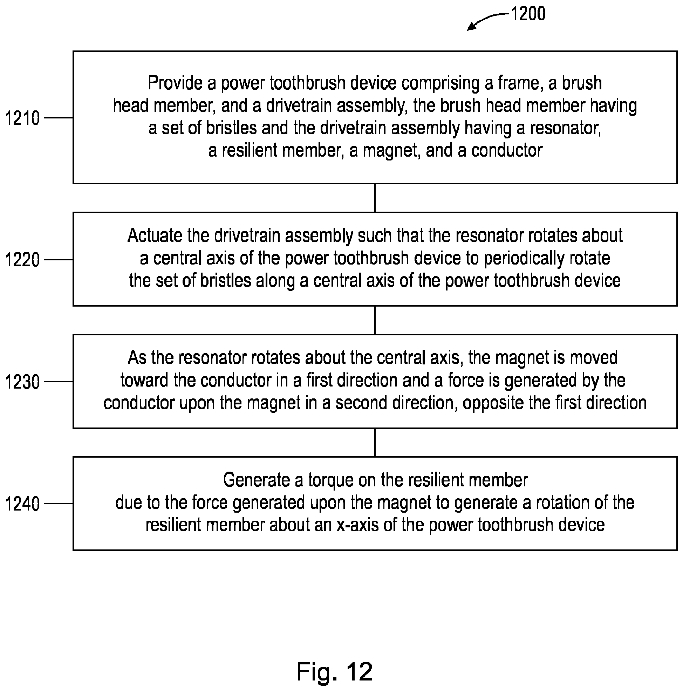

FIG. 12 depicts a flowchart illustrating a method of operating a power toothbrush device according to an exemplary embodiment where the device internally drives x-axis rotary motion from the y-axis motion.

The method begins at step 1210, with providing a power toothbrush device having a frame, a brush head member, and a drivetrain assembly as described herein. The brush head member comprises a set of bristles extending from the brush head in a bristle direction. The drivetrain assembly comprises a drivetrain shaft configured to transmit vibrations to the brush head member and the set of bristles. The drivetrain assembly further comprises a resonator (e.g., resonator 810), a resilient member (e.g., member 820), a magnet (e.g., magnets 830A, 830B), and a conductor (e.g., conductors 840A, 840B).

At step 1220, the drivetrain assembly is actuated such that the resonator rotates about a central axis or y-axis of the power toothbrush device (e.g., axis A) to periodically rotate the set of bristles. This movement pattern constitutes a sweeping motion.

At step 1230, as the resonator rotates about the central axis and a magnet of a pair of magnets moves toward a conductor of a pair of conducts, a force is generated upon the magnet in an opposite direction.

At step 1240, a torque is generated on the resilient member embodied as a V-shaped spring due to the force generated upon the magnet in the opposite direction. The torque generates a rotation of the resilient member about the x-axis of the power toothbrush device. The torque leads to this rotation due to the mechanical compliance built into the construction of the V-shaped spring. This movement pattern constitutes a power tapping motion derived from the sweeping motion.

Embodiments of the power toothbrush device can further control the amplitude of the x-axis motion and phase angles between the x-axis and y-axis rotary motions using the coil and electrical components described herein. Additionally, the tapping motion described herein can be turned off by opening a circuit, for example, when such motion is not desired in particular areas of the user's mouth.

The operational effect of the power toothbrush device described herein is that it can provide improved cleansing performance at critical areas of the mouth by driving the bristles of the toothbrush in a vertical periodic motion that is parallel to the direction of the bristles or an axis of alignment of the bristles, where the amplitude of the vertical motion is equal to or greater than 0.25 mm (i.e., power tapping). The inventive power tapping motion: (i) achieves deeper reach in gum pockets to remove subgingival plaque, (ii) achieves higher peak forces at surfaces which improve plaque and/or stain removal, (iii) prevents pinning of bristle tufts which improves plaque removal by restoring beneficial tuft sweeping behavior, (iv) achieves more resilience to variables of use like toothbrush placement, toothbrush angle, and toothbrush pressure, and (v) provides new options for experiential modes for the consumer.

All definitions, as defined and used herein, should be understood to control over dictionary definitions, definitions in documents, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

It should also be understood that, unless clearly indicated to the contrary, in any methods claimed herein that include more than one step or act, the order of the steps or acts of the method is not necessarily limited to the order in which the steps or acts of the method are recited.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only within the scope of the appended claims.

## Claims

1. A resonator assembly (400, 800) for a drivetrain assembly of a power toothbrush device, the resonator assembly comprising:
a resonator (410, 810) connected to a drivetrain shaft (124, 824) configured to transmit motion generated by the drivetrain assembly to a brush head member (104), wherein the resonator is configured to rotate about a central axis (A) of the power toothbrush device to periodically move a set of bristles (116) of the brush head member in a first movement pattern;
a fixed point (430) positioned on a frame (445) of the power toothbrush device;
a resilient member (420, 820) connected at a first end (802) proximate to the resonator and at a second end (804) to the fixed point (430);
a magnet (700A, 700B, 830A, 830B) connected with the resonator; and
a conductor (710A, 710B, 840A, 840B) connected with the frame, wherein the conductor is proximate to the magnet;
wherein when the magnet moves toward the conductor in a first direction (812), a force (D_{T}) is generated upon the magnet in a second direction that is opposite the first direction, and the force (D_{T}) generated upon the magnet thereby causes a torque on the resilient member and the torque generates a rotation of the resilient member about a second axis (B) that is different than the central axis.

2. The resonator assembly of claim 1, wherein the resilient member is a V-shaped spring.

3. The resonator assembly of claim 1, wherein the second axis is perpendicular to the central axis and extends along an x-axis of the power toothbrush device.

4. The resonator assembly of claim 1, wherein the rotation of the resilient member about the second axis moves the set of bristles in a second movement pattern that is different than the first movement pattern, wherein the set of bristles moves parallel to a bristle direction of the set of bristles in the second movement pattern.

5. The resonator assembly of claim 1, wherein the magnet is positioned closer to the central axis than the conductor.

6. The resonator assembly of claim 1, wherein a top surface of the conductor is aligned with a top surface of the resilient member and the magnet is positioned above the top surface of the conductor.

7. The resonator assembly of claim 1, further comprising a coil (1000) connected in series to a capacitor or a diode to passively control the force generated on the magnet.

8. The resonator assembly of claim 1, further comprising a coil (1100) connected in series to a switch to actively control the force generated on the magnet.

9. A power toothbrush device (100), comprising:
a frame (445) having a fixed point (430);
a brush head member (104) having a set of bristles (116) at a distal end thereof, the set of bristles extending from the brush head in a bristle direction; and
a drivetrain assembly (400, 800) having a drivetrain shaft (124, 824) configured to transmit motion to the brush head member, the drivetrain assembly comprising:
a resonator (410, 810) connected to the drivetrain shaft, wherein the resonator is configured to rotate about a central axis (A) of the power toothbrush device to periodically move the set of bristles in a first movement pattern;
a resilient member (420, 820) connected at a first end (802) to the resonator and connected at a second end (804) to the fixed point of the frame;
a magnet (700A, 700B, 830A, 830B) connected with the resonator; and
a conductor (710A, 710B, 840A, 840B) connected with the frame, wherein the conductor is proximate to the magnet;
wherein as the magnet moves toward the conductor in a first direction (812), a force (D_{T}) is generated upon the magnet in a second direction that is opposite the first direction, and the force generated upon the magnet thereby causes a torque on the resilient member and the torque generates a rotation of the resilient member about a second axis (B) that is different than the central axis.

10. The power toothbrush device of claim 9, wherein the resilient member is a V-shaped spring.

11. The power toothbrush device of claim 9, wherein the second axis is perpendicular to the central axis and extends along an x-axis of the power toothbrush device.

12. The power toothbrush device of claim 9, wherein the rotation of the resilient member about the second axis moves the set of bristles in a second movement pattern that is different than the first movement pattern, wherein the set of bristles moves parallel to the bristle direction in the second movement pattern.

13. The power toothbrush device of claim 9, wherein the magnet is positioned closer to the central axis than the conductor.

14. The power toothbrush device of claim 9, wherein a top surface of the conductor is aligned with a top surface of the resilient member and the magnet is positioned above the top surface of the conductor.

15. The power toothbrush device of claim 9, further comprising a coil (1000, 1100) connected in series to a capacitor, a diode, or a switch to control the force generated on the magnet.

## Patentansprüche

1. Resonatoranordnung (400, 800) für eine Antriebsstranganordnung einer elektrischen Zahnbürstenvorrichtung, die Resonatoranordnung umfassend:
einen Resonator (410, 810), der mit einer Antriebsstrangwelle (124, 824) verbunden ist, die konfiguriert ist, um die von der Antriebsstranganordnung erzeugte Bewegung auf ein Bürstenkopfelement (104) zu übertragen, wobei der Resonator konfiguriert ist, um sich um eine Mittelachse (A) der elektrischen Zahnbürstenvorrichtung zu drehen, um einen Satz von Borsten (116) des Bürstenkopfelements periodisch in einem ersten Bewegungsmuster zu bewegen;
einen Festpunkt (430), der auf einem Rahmen (445) der elektrischen Zahnbürstenvorrichtung positioniert ist;
ein elastisches Element (420, 820), das an einem ersten Ende (802) in der Nähe des Resonators und an einem zweiten Ende (804) mit dem Festpunkt (430) verbunden ist;
einen Magneten (700A, 700B, 830A, 830B), der mit dem Resonator verbunden ist; und
einen Leiter (710A, 710B, 840A, 840B), der mit dem Rahmen verbunden ist, wobei sich der Leiter in der Nähe des Magneten befindet;
wobei, wenn sich der Magnet in einer ersten Richtung (812) auf den Leiter zubewegt, eine Kraft (D_{T}) auf den Magneten in einer zweiten Richtung, die der ersten Richtung entgegengesetzt ist, erzeugt wird, und die auf den Magneten erzeugte Kraft (D_{T}) dadurch ein Drehmoment auf das elastische Element bewirkt und das Drehmoment eine Drehung des elastischen Elements um eine zweite Achse (B), die sich von der Mittelachse unterscheidet, erzeugt.

2. Resonatoranordnung nach Anspruch 1, wobei das elastische Element eine V-förmige Feder ist.

3. Resonatoranordnung nach Anspruch 1, wobei die zweite Achse senkrecht zur Mittelachse ist und sich entlang einer x-Achse der elektrischen Zahnbürstenvorrichtung erstreckt.

4. Resonatoranordnung nach Anspruch 1, wobei die Drehung des elastischen Elements um die zweite Achse den Satz von Borsten in einem zweiten Bewegungsmuster bewegt, das sich vom ersten Bewegungsmuster unterscheidet, wobei sich der Satz von Borsten im zweiten Bewegungsmuster parallel zu einer Borstenrichtung des Satzes von Borsten bewegt.

5. Resonatoranordnung nach Anspruch 1, wobei der Magnet näher an der Mittelachse positioniert ist als der Leiter.

6. Resonatoranordnung nach Anspruch 1, wobei eine Oberseite des Leiters mit einer Oberseite des elastischen Elements ausgerichtet ist und der Magnet oberhalb der Oberseite des Leiters positioniert ist.

7. Resonatoranordnung nach Anspruch 1, weiter umfassend eine Spule (1000), die mit einem Kondensator oder einer Diode in Reihe geschaltet ist, um die auf den Magneten erzeugte Kraft passiv zu steuern.

8. Resonatoranordnung nach Anspruch 1, weiter umfassend eine Spule (1100), die mit einem Schalter in Reihe geschaltet ist, um die auf den Magneten ausgeübte Kraft aktiv zu steuern.

9. Elektrische Zahnbürstenvorrichtung (100), umfassend:
einen Rahmen (445), der einen Festpunkt (430) aufweist;
ein Bürstenkopfelement (104), das einen Satz von Borsten (116) an einem distalen Ende davon aufweist, wobei sich der Satz von Borsten vom Bürstenkopf in einer Borstenrichtung erstreckt; und
eine Antriebsstranganordnung (400, 800), die eine Antriebsstrangwelle (124, 824) aufweist, die konfiguriert ist, um Bewegung auf das Bürstenkopfelement zu übertragen, die Antriebsstranganordnung umfassend:
einen Resonator (410, 810), der mit der Antriebsstrangwelle verbunden ist, wobei der Resonator konfiguriert ist, um sich um eine Mittelachse (A) der elektrischen Zahnbürstenvorrichtung zu drehen, um den Satz von Borsten periodisch in einem ersten Bewegungsmuster zu bewegen;
ein elastisches Element (420, 820), das an einem ersten Ende (802) mit dem Resonator und an einem zweiten Ende (804) mit dem Festpunkt des Rahmens verbunden ist;
einen Magneten (700A, 700B, 830A, 830B), der mit dem Resonator verbunden ist; und
einen Leiter (710A, 710B, 840A, 840B), der mit dem Rahmen verbunden ist, wobei sich der Leiter in der Nähe des Magneten befindet;
wobei, wenn sich der Magnet in einer ersten Richtung (812) auf den Leiter zubewegt, eine Kraft (D_{T}) auf den Magneten in einer zweiten Richtung, die der ersten Richtung entgegengesetzt ist, erzeugt wird, und die auf den Magneten erzeugte Kraft dadurch ein Drehmoment auf das elastische Element bewirkt und das Drehmoment eine Drehung des elastischen Elements um eine zweite Achse (B), die sich von der Mittelachse unterscheidet, erzeugt.

10. Elektrische Zahnbürstenvorrichtung nach Anspruch 9, wobei das elastische Element eine V-förmige Feder ist.

11. Elektrische Zahnbürstenvorrichtung nach Anspruch 9, wobei die zweite Achse senkrecht zur Mittelachse ist und sich entlang einer x-Achse der elektrischen Zahnbürstenvorrichtung erstreckt.

12. Elektrische Zahnbürstenvorrichtung nach Anspruch 9, wobei die Drehung des elastischen Elements um die zweite Achse den Satz von Borsten in einem zweiten Bewegungsmuster bewegt, das sich vom ersten Bewegungsmuster unterscheidet, wobei sich der Satz von Borsten im zweiten Bewegungsmuster parallel zur Borstenrichtung bewegt.

13. Elektrische Zahnbürstenvorrichtung nach Anspruch 9, wobei der Magnet näher an der Mittelachse positioniert ist als der Leiter.

14. Elektrische Zahnbürstenvorrichtung nach Anspruch 9, wobei eine Oberseite des Leiters mit einer Oberseite des elastischen Elements ausgerichtet ist und der Magnet oberhalb der Oberseite des Leiters positioniert ist.

15. Elektrische Zahnbürstenvorrichtung nach Anspruch 9, weiter umfassend eine Spule (1000, 1100), die mit einem Kondensator, einer Diode oder einem Schalter in Reihe geschaltet ist, um die auf den Magneten erzeugte Kraft zu steuern.

## Revendications

1. Assemblage résonateur (400, 800) pour un assemblage de transmission d'un dispositif de brosse à dents électrique, l'assemblage résonateur comprenant :
un résonateur (410, 810) relié à un arbre de transmission (124, 824) configuré pour transmettre un mouvement généré par l'assemblage de transmission à un élément de tête de brosse (104), dans lequel le résonateur est configuré pour tourner autour d'un axe central (A) du dispositif de brosse à dents électrique afin de déplacer périodiquement un ensemble de poils (116) de l'élément de tête de brosse selon un premier motif de mouvement ;
un point fixe (430) positionné sur un cadre (445) du dispositif de brosse à dents électrique ;
un élément élastique (420, 820) relié au niveau d'une première extrémité (802) à proximité du résonateur et au niveau d'une seconde extrémité (804) au point fixe (430) ;
un aimant (700A, 700B, 830A, 830B) relié au résonateur ; et
un conducteur (710A, 710B, 840A, 840B) relié au cadre, dans lequel le conducteur est à proximité de l'aimant ;
dans lequel, lorsque l'aimant se déplace vers le conducteur dans une première direction (812), une force (D_{T}) est générée sur l'aimant dans une seconde direction qui est opposée à la première direction, et la force (D_{T}) générée sur l'aimant provoque ainsi un couple de rotation sur l'élément élastique et le couple génère une rotation de l'élément élastique autour d'un second axe (B) qui est différent de l'axe central.

2. Assemblage résonateur selon la revendication 1, dans lequel l'élément élastique est un ressort en forme de V.

3. Assemblage résonateur selon la revendication 1, dans lequel le second axe est perpendiculaire à l'axe central et s'étend le long d'un axe x du dispositif de brosse à dents électrique.

4. Assemblage résonateur selon la revendication 1, dans lequel la rotation de l'élément élastique autour du second axe déplace l'ensemble de poils selon un second motif de mouvement qui est différent du premier motif de mouvement, dans lequel l'ensemble de poils se déplace parallèlement à une direction de poils de l'ensemble de poils selon le second motif de mouvement.

5. Assemblage résonateur selon la revendication 1, dans lequel l'aimant est positionné plus près de l'axe central que le conducteur.

6. Assemblage résonateur selon la revendication 1, dans lequel une surface supérieure du conducteur est alignée avec une surface supérieure de l'élément élastique et l'aimant est positionné au-dessus de la surface supérieure du conducteur.

7. Assemblage résonateur selon la revendication 1, comprenant en outre une bobine (1000) reliée en série à un condensateur ou à une diode pour commander passivement la force générée sur l'aimant.

8. Assemblage résonateur selon la revendication 1, comprenant en outre une bobine (1100) reliée en série à un commutateur pour commander activement la force générée sur l'aimant.

9. Dispositif de brosse à dents électrique (100), comprenant :
un cadre (445) présentant un point fixe (430) ;
un élément de tête de brosse (104) présentant un ensemble de poils (116) au niveau d'une extrémité distale de celui-ci, l'ensemble de poils s'étendant à partir de la tête de brosse dans une direction de poils ; et
un assemblage de transmission (400, 800) présentant un arbre de transmission (124, 824) configuré pour transmettre un mouvement à l'élément de tête de brosse, l'assemblage de transmission comprenant :
un résonateur (410, 810) relié à l'arbre de transmission, dans lequel le résonateur est configuré pour tourner autour d'un axe central (A) du dispositif de brosse à dents électrique afin de déplacer périodiquement l'ensemble de poils selon un premier motif de mouvement ;
un élément élastique (420, 820) relié au niveau d'une première extrémité (802) au résonateur et relié au niveau d'une seconde extrémité (804) au point fixe du cadre ;
un aimant (700A, 700B, 830A, 830B) relié au résonateur ; et
un conducteur (710A, 710B, 840A, 840B) relié au cadre, dans lequel le conducteur est à proximité de l'aimant ;
dans lequel, lorsque l'aimant se déplace vers le conducteur dans une première direction (812), une force (D_{T}) est générée sur l'aimant dans une seconde direction qui est opposée à la première direction, et la force générée sur l'aimant provoque ainsi un couple de rotation sur l'élément élastique et le couple génère une rotation de l'élément élastique autour d'un second axe (B) qui est différent de l'axe central.

10. Dispositif de brosse à dents électrique selon la revendication 9, dans lequel l'élément élastique est un ressort en forme de V.

11. Dispositif de brosse à dents électrique selon la revendication 9, dans lequel le second axe est perpendiculaire à l'axe central et s'étend le long d'un axe x du dispositif de brosse à dents électrique.

12. Dispositif de brosse à dents électrique selon la revendication 9, dans lequel la rotation de l'élément élastique autour du second axe déplace l'ensemble de poils selon un second motif de mouvement qui est différent du premier motif de mouvement, dans lequel l'ensemble de poils se déplace parallèlement à la direction de poils selon le second motif de mouvement.

13. Dispositif de brosse à dents électrique selon la revendication 9, dans lequel l'aimant est positionné plus près de l'axe central que le conducteur.

14. Dispositif de brosse à dents électrique selon la revendication 9, dans lequel une surface supérieure du conducteur est alignée avec une surface supérieure de l'élément élastique et l'aimant est positionné au-dessus de la surface supérieure du conducteur.

15. Dispositif de brosse à dents électrique selon la revendication 9, comprenant en outre une bobine (1000, 1100) reliée en série à un condensateur, une diode ou un commutateur pour commander la force générée sur l'aimant.
